# EUROPÄISCHE PATENTSCHRIFT

(11) **EP 1 854 606 B1**
(45) Veröffentlichungstag und Bekanntmachung des Hinweises auf die Patenterteilung: **10.09.2008**
(21) Anmeldenummer: 06009645.0
(22) Anmeldetag: 10.05.2006
(51) Int. Cl.: B27M 3/18, B23K 20/10

(54) **Korpuspresse**
Carcass press
Presse à carcasses

(43) Veröffentlichungstag der Anmeldung: 14.11.2007
(73) Patentinhaber: Ligmatech Automationssysteme GmbH, 09638 Lichtenberg (DE)
(72) Erfinder: Tönnigs, Bodo, 09638 Lichtenberg (DE)
(74) Vertreter: HOFFMANN EITLE

(56) Entgegenhaltungen:
- EP-A- 1 046 482
- EP-A- 1 593 472
- WO-A-98/42988
- US-A- 4 243 465

## Beschreibung

### Technisches Gebiet

Die vorliegende Erfindung betrifft eine Korpuspresse nach dem Oberbegriff von Anspruch 1.

### Stand der Technik

Möbelkorpusse werden im Allgemeinen aus plattenförmigen Werkstücken gebildet, die unter Einsatz von Dübeln und Leim gefügt und anschließend verpresst werden. Dabei finden Korpuspressen der eingangs genannten Art verbreitete Anwendung.

Eine gattungsgemäße Korpuspresse ist beispielsweise in der EP 1 046 482 A offenbart und besitzt einen verwindungssteifen, aufrecht stehenden Ständerrahmen mit einer Vorder- und einer Rückseite, ein Senkrechtpresswangenpaar mit einer unteren und einer oberen Presswange, die beide vom Ständerrahmen vorderseitig vorstehen, wobei eine der Presswangen mittels eines Antriebs senkrecht verstellbar ist und sich am Ständerrahmen abstützt und die andere der Presswangen mit dem Ständerrahmen starr verbunden ist. Ferner besitzt die bekannte Korpuspresse ein Waagrecht-Presswangenpaar mit einer rechten und einer linken Presswange, die beide vom Ständerrahmen zumindest beim Pressen vorderseitig vorstehen, und die beide jeweils am Ständerrahmen mittels horizontal verfahrbaren Supporten in dem Zwischenraum zwischen dem Senkrecht-Presswangenpaar verfahrbar sind.

Allgemein unterscheidet man Durchlaufpressen und Fügepressen. Bei Durchlaufpressen werden die zu verpressenden Korpusse zunächst vollständig zusammengesetzt (gefügt) und anschließend in die Korpuspresse eingefördert und verpresst, während bei Fügepressen in der Presse selbst Einrichtungen zum Fügen des Korpus oder zumindest einzelner Korpusteile integriert sind, wie beispielsweise Halteeinrichtungen für Zwischenböden etc.

Beide Pressenkonzepte haben sich in der Praxis bewährt. Allerdings bedingt der Einsatz von Leim (meist Weißleim) im Bereich der Dübelverbindungen, dass der Korpus im Anschluss an das Verpressen erst nach einer beträchtlichen Aushärtungszeit weiterbearbeitet oder verpackt etc. werden kann. Ferner muss austretender, überschüssiger Leim oft nachträglich entfernt werden, was zeit- und arbeitsintensiv ist.

Ferner offenbart die EP 1593472 A1 eine Korpuspresse nach dem Oberbegriff von Anspruch 1, die eine Verbindungseinrichtung aufweist.

### Darstellung der Erfindung

Es ist daher Aufgabe der vorliegenden Erfindung, eine Korpuspresse der eingangs genannten Art bereitzustellen, die eine beschleunigte und weniger arbeitsintensive Herstellung von Möbelkorpussen ermöglicht.

Diese Aufgabe wird erfindungsgemäß durch eine Korpuspresse mit den Merkmalen von Anspruch 1 gelöst. Besonders vorteilhafte Weiterbildungen der Erfindung sind in den abhängigen Ansprüchen angegeben.

Der Erfindung liegt der Gedanke zugrunde, auf den Einsatz von Leim im Bereich der Dübelverbindungsstellen vollständig verzichten zu können. Zu diesem Zweck ist erfindungsgemäß vorgesehen, dass die Korpuspresse der eingangs genannten Art ferner eine Ultraschallschweißeinrichtung aufweist. Auf diese Weise wird ermöglicht, anstelle herkömmlicher Holzdübel mit Leim neuartige Dübel als Verbindungsmittel einzusetzen, die sich durch Aufbringung mechanischer Schwingungen (Ultraschallschwingungen) zumindest teilweise aufschmelzen lassen. Hierbei kann es sich beispielsweise um Dübel handeln, die zumindest teilweise aus einem thermoplastischen Material bestehen.

Durch die erfindungsgemäße Ausgestaltung und den hierdurch ermöglichten Verzicht auf Leim im Bereich der Dübelverbindungen können die verpressten Korpusse praktisch unmittelbar nach dem Pressvorgang weiteren Bearbeitungs- oder Verpackungsvorgängen etc. zugeführt werden, wodurch sich die Durchlaufzeit der Korpusse drastisch verkürzt und auf etwaige Zwischenpuffer verzichtet werden kann. Ferner erfordern derart verpresste Korpusse keine Nachreinigung. Gleichzeitig erfüllen derart verpresste Korpusse mindestens die gleichen Festigkeits- und Dauerhaftigkeitsanforderungen wie herkömmlich verleimte Korpusse.

Die Ultraschallschweißeinrichtung kann im Rahmen der vorliegenden Erfindung auf unterschiedliche Art und Weise ausgestaltet sein. Gemäß einer Weiterbildung der vorliegenden Erfindung ist jedoch vorgesehen, dass die Ultraschallschweißeinrichtung mindestens eine Sonotrode aufweist, d.h. ein Schweißwerkzeug, das mit den zu verbindenden Werkstücken in Presskontakt zu bringen ist. Obgleich die Sonotroden im Rahmen der vorliegenden Erfindung an beliebiger Stelle als unabhängige Elemente angeordnet werden können, ist es im Hinblick auf eine kompakte und einfache Konstruktion der erfindungsgemäßen Korpuspresse bevorzugt, dass die mindestens eine Sonotrode in mindestens einer der Presswangen angeordnet ist. Dabei ist es besonders bevorzugt, dass in jeder Presswange mindestens eines Presswangenpaares, insbesondere Horizontalpresswangenpaares, jeweils mindestens eine Sonotrode angeordnet ist. Hierdurch wird ermöglicht, dass der für die jeweilige Sonotrode erforderliche Gegendruck ebenfalls durch eine Sonotrode mit zugehöriger Presswange erzeugt wird, sodass auf Gegendruckelemente und dergleichen verzichtet werden kann.

Gemäß einer Weiterbildung der Erfindung ist vorgesehen, dass die Sonotroden derart in den Presswangen angeordnet sind, dass sie zumindest einen Teil einer Pressfläche der Presswangen bilden. Hierdurch ergibt sich ein besonders effizienter und zügiger Ultraschallschweißvorgang.

Gemäß einer Weiterbildung der Erfindung umfasst die Ultraschallschweißvorrichtung ferner einen so genannten Konverter, d.h. einen Schallwandler, der von einem Generator erzeugte elektrische Schwingungen in mechanische Schwingungen umwandelt. Darüber hinaus umfasst die Ultraschallschweißvorrichtung auch ein Amplituden-Transformationsstück (Booster), welches die vom Konverter gelieferte Schwingung für die jeweilige Sonotrode transformiert. Obgleich diese Bauteile prinzipiell an beliebiger Stelle in der Korpuspresse angeordnet sein können, ist gemäß einer Weiterbildung der vorliegenden Erfindung vorgesehen, dass die mindestens eine, mit mindestens einer Sonotrode versehene Presswange ferner einen Booster und auch einen Konverter für die Sonotrode aufweist. Hierdurch ergibt sich eine einfache Konstruktion, die sich leicht und präzise auf die jeweiligen Anforderungen einstellen lässt.

Die Grundkonstruktion der Korpuspresse kann im Rahmen der vorliegenden Erfindung auf unterschiedlichste Art und Weise ausgestaltet sein. Eine Korpuspressenkonstruktion, mit der sich Korpusse effizient pressen lassen, ist in Anspruch 6 angegeben. Dabei ist es besonders bevorzugt, dass sich die Supporte dieser Konstruktion zumindest in vertikaler Richtung jeweils ausschließlich am Grundgestell abstützen und am gegenüberliegenden Ende frei sind. Auf diese Weise kann bei der erfindungsgemäßen Korpuspresse vollständig auf im Stand der Technik vorhandene, aufrecht stehende Ständerrahmen verzichtet werden (vgl. beispielsweise EP 1 046 482 A), sodass ein Großteil der sperrigen und schwergewichtigen Bauteile der bekannten Korpuspressen entfällt und der Aufbau der Korpuspresse extrem vereinfacht wird. Durch den Wegfall des Ständerrahmens wird darüber hinaus der Zugang zu der Korpuspresse deutlich vereinfacht, und die Korpuspresse benötigt vorteilhaft deutlich weniger Platz.

Die Abstützung der Supporte am Grundgestell kann im Rahmen der vorliegenden Erfindung auf unterschiedlichste Art und Weise erfolgen. Um bei leichter Verschiebbarkeit der Supporte die Einleitung hoher Pressenkräfte zu ermöglichen, ist gemäß einer Weiterbildung der Erfindung jedoch vorgesehen, dass die Supporte sich jeweils über mindestens zwei Führungselemente am Grundgestell abstützen. Bei den Führungselementen handelt es sich bevorzugt um Führungsschienen.

Der Verfahrantrieb für die obere Presswange der genannten Korpuspressenkonstruktion kann im Rahmen der vorliegenden Erfindung beispielsweise in die Supporte integriert sein. Gemäß einer Weiterbildung der vorliegenden Erfindung ist jedoch vorgesehen, dass die Korpuspresse ferner einen Antriebsständer für die obere Presswange aufweist, der einen Antrieb, insbesondere Servoantrieb besitzt. Hierdurch wird verhindert, dass die Konstruktion der Supporte übermäßig komplex wird, ohne dass die Gesamtkonstruktion spürbar komplizierter wird. Ferner werden die beim Pressen auftretenden, hohen Kräfte der oberen Presswange über den Antriebsständer direkt in das Grundgestell eingeleitet.

Um die Gesamtkonstruktion der Korpuspresse und insbesondere den Antrieb weiter zu entlasten ist gemäß einer Weiterbildung der Erfindung vorgesehen, dass die Korpuspresse ferner einen Gewichtsausgleich aufweist. Hierdurch muss der Antrieb nicht permanent das Gewicht der oberen Presswange ausbalancieren. Dabei ist es besonders bevorzugt, dass der Gewichtsausgleich in den Antriebsständer integriert ist, sodass Antrieb- und Gewichtsausgleich direkt zusammenwirken können. Ferner hat es sich als vorteilhaft erwiesen, dass der Gewichtsausgleich pneumatisch arbeitet.

Gemäß einer weiteren Zielrichtung der Erfindung weist die Korpuspresse ferner mindestens ein Haltelement für zu fügende Korpusteile auf. Hierdurch wird ermöglicht, dass nicht notwendigerweise alle Korpusteile vor dem Einfördern in die Korpuspresse gefügt werden müssen, sondern dass auch noch innerhalb der Korpuspresse einzelne oder gegebenenfalls auch alle Korpusteile bereitgestellt und gefügt werden können. Auf diese Weise wird die Variabilität der Korpuspresse extrem gesteigert. Dabei ist es besonders bevorzugt, dass das mindestens eine Haltelement in Bezug auf das Grundgestell verfahrbar ist, um die Variabilität noch weiter zu erhöhen. Ferner kann das mindestens eine Haltelemente gemäß einer Weiterbildung der Erfindung auch dazu benutzt werden, um darin mindestens eine Sonotrode und einen Booster sowie einen Konverter vorzusehen. Hierdurch ergibt sich eine besonders kompakte und vielseitige Konstruktion der erfindungsgemäßen Korpuspresse, mit der unterschiedlichste Geometrien und Anordnungen von Möbelkorpussen gefügt und verpresst werden können.

Ein besonders vorteilhaftes Verfahren zum Verpressen von Korpusteilen unter Einsatz der oben beschriebenen Korpuspresse ist in Patentanspruch 13 angegeben. Mit diesem Verfahren lassen sich die oben beschriebenen Vorteile auf einfache Weise erzielen.

### Kurze Beschreibung der Zeichnungen

Fig. 1 zeigt schematisch eine Perspektivansicht einer Korpuspresse als bevorzugte Ausführungsform der vorliegenden Erfindung;
Fig. 2 zeigt schematisch eine rückwärtige Perspektivansicht der in Fig. 1 gezeigten Korpuspresse.

### Ausführliche Beschreibung bevorzugter Ausführungsformen

Bevorzugte Ausführungsformen der vorliegenden Erfindung werden nachfolgend ausführlich unter Bezugnahme auf die begleitenden Zeichnungen beschrieben.

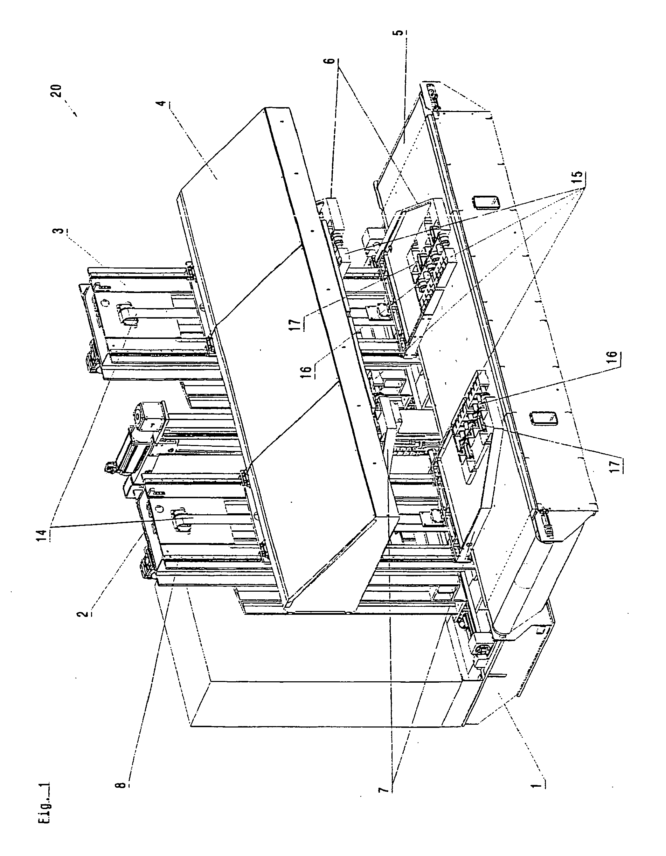

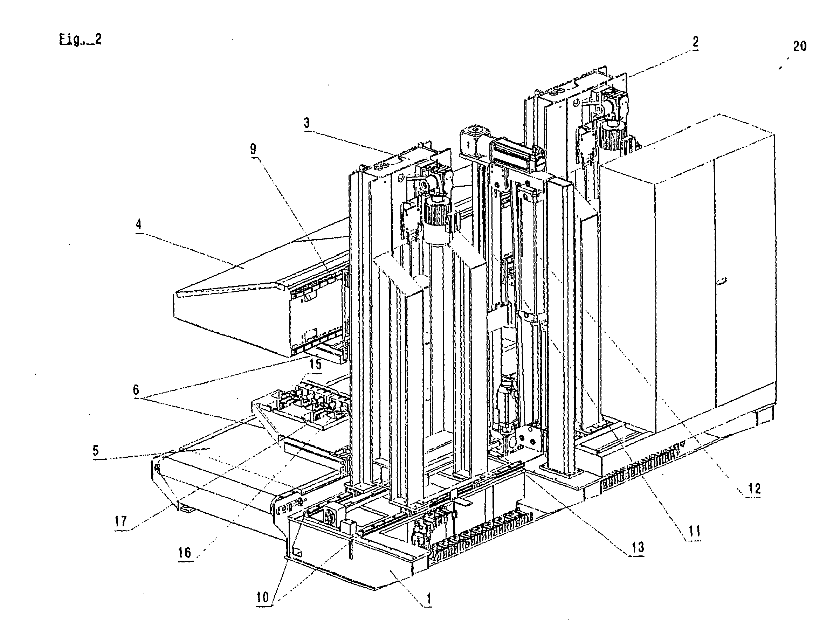

Eine Korpuspresse 20 als bevorzugte Ausführungsform der vorliegenden Erfindung ist in Fig. 1 und 2 schematisch in Perspektivansichten gezeigt. Die Korpuspresse 20 dient zum Verpressen von Korpusteilen zu Möbelkorpussen, wie beispielsweise Hoch-, Ober- oder Unterschränken, sonstigen Möbelstücken oder dergleichen.

Die Korpuspresse 20 besitzt ein Grundgestell 1, das beispielsweise aus einer geschweißten Stahlkonstruktion bestehen kann. An dem Grundgestell 1 ist seitlich eine untere Presswange vorgesehen, die in der vorliegenden Ausführungsform mit einer Fördereinrichtung 5 integriert ist, auf die untenstehend noch näher eingegangen wird.

Ferner sind auf dem Grundgestell 1 in der vorliegenden Ausführungsform zwei Supporte 2, 3 angeordnet, die in der vorliegenden Ausführungsform beide an dem Grundgestell 1 horizontal verfahrbar sind. Die Verfahrbarkeit der Supporte 2, 3 wird hier über Führungsschienen 10 sowie zwei gegenläufige, servomotorisch angetriebene Kugelgewindespindeln 13 erreicht. Wie in Fig. 2 am besten zu erkennen ist, sind die Führungsschienen 10 voneinander beabstandet, sodass um eine zu den Führungsschienen 10 parallele Achse ein Biegemoment übertragen und entsprechende Kräfte von den Supporten in das Grundgestell eingeleitet werden können.

Das den Führungsschienen 10 gegenüberliegende, freie Ende 2', 3' der Supporte ist frei (ungelagert), sodass sich die Supporte 2, 3 zumindest in vertikaler Richtung ausschließlich am Grundgestell 1 abstützen.

An den Supporten 2, 3 sind jeweils Horizontpresswangen 6, 7 vorgesehen, die paarweise angeordnet sind, d.h. eine Horizontalpresswange 6 ist jeweils betrieblich auf eine gegenüberliegende Horizontalpresswange 7 abgestimmt.

In der vorliegenden Ausführungsform sind in den Horizontalpresswangen jeweils eine Sonotrode 15, ein Booster 16 und ein Konverter 17 vorgesehen, welche die wesentlichen Bauteile der erfindungsgemäßen Ultraschallschweißeinrichtung darstellen. Diese umfasst ferner einen (elektronischen) Generator (nicht gezeigt), der elektrische Schwingungen erzeugt, die wiederum vom Konverter 17 in mechanische Schwingungen umgewandelt werden. Diese werden über den Booster 16 an die Sonotrode 15 weitergegeben, um sie schließlich im Zusammenhang mit dem Verpressvorgang auf hier nicht näher gezeigte Dübel zu übertragen. Da die Dübel zumindest teilweise aus einem thermoplastischen Material bestehen, werden diese durch die Ultraschallschwingungen aufgeschmolzen, um anschließend wieder zu erhärten und für eine Verbindung der jeweiligen Korpusteile zu sorgen.

Obgleich die Bauteile der Ultraschallschweißeinrichtung in der vorliegenden Ausführungsform in Horizontalpresswangen vorgesehen sind, ist zu beachten, dass die Sonotroden 15, Booster 16 und Konverter 17 etc. auch in völlig anders angeordneten Presswangen oder Presswangenpaaren angeordnet sein können, wie beispielsweise Vertikalpresswangen, Eckpresswangen, Schrägpresswangen oder dergleichen. Dabei ist es stets vorteilhaft, wenn die Sonotroden 15 jeweils derart angeordnet sind, dass sie einen Teil einer Pressfläche der Presswangen 6, 7 bilden.

Die Verfahrbarkeit der Horizontalpresswangen 6, 7 entlang der Supporte 2, 3 wird über eine Verstelleinrichtung 14, beispielsweise in Form eines Riemens, erreicht. Ferner besitzt die Korpuspresse 20 eine obere Presswange 4, die über Führungsschienen 8 vertikal verschiebbar an den Supporten 2, 3 gelagert ist. Darüber hinaus sind die Supporte 2, 3 auch horizontal verschiebbar in Bezug auf die obere Presswange 4 angeordnet, und zwar über Führungsschienen 9, die in Fig. 2 am besten zu erkennen sind.

Unter horizontal und vertikal sind im Rahmen der vorliegenden Erfindung zwei Richtungen zu verstehen, die orthogonal zueinander sind. Die Erfindung ist somit nicht darauf beschränkt, dass die Korpuspresse bzw. deren Bauteile genau horizontal oder vertikal angeordnet sind, sondern dass die genannten Richtungen orthogonal zueinander sind.

Die Korpuspresse 20 umfasst ferner einen Antriebsständer 11 für die obere Presswange 4, der in der vorliegenden Ausführungsform einen Servoantrieb 11' aufweist. Mittels dieses Antriebes 11' kann die obere Presswange 4 vertikal entlang der Supporte 2, 3 verfahren werden. Dabei ist in den Antriebsständer 11 ein (beispielsweise pneumatischer) Gewichtsausgleich 12 integriert, wodurch der Antrieb 11' von Eigengewichtslasten der oberen Pressbewegungen 4 weitgehend entlastet wird.

Schließlich besitzt die Korpuspresse 20 in der vorliegenden Ausführungsform eine Fördereinrichtung 5, beispielsweise in Form eines Förderbandes, mittels dessen Korpusteile bzw. zu verpressende Korpusse in die Korpuspresse eingefördert bzw. verpresste Korpusse aus dieser ausgefördert werden können. Dabei ist die untere Presswange 1' in der vorliegenden Ausführungsform in die Fördereinrichtung 5 integriert, wodurch sich eine besonders kompakte und einfache Konstruktion ergibt.

Obgleich voranstehend unter Bezugnahme auf Fig. 1 und 2 eine sogenannte Durchlaufpresse beschrieben worden ist, ist die Erfindung auch auf andere Korpuspressenkonzepte anwendbar, wie beispielsweise Fügepressen. Derartige Pressen weisen üblicherweise Halteelemente für Korpusteile auf, die erst in der Korpuspresse selbst mit den anderen Korpusteilen gefügt werden. Diese Halteelemente sind bevorzugt verfahrbar bzw. verschwenkbar und können ebenfalls jeweils mit mindestens einer Sonotrode ausgestattet sein.

## Patentansprüche

1. Korpuspresse (20) zum Verpressen von Korpusteilen zu Möbelkorpussen, wie z.B. Hoch-, Ober- oder Unterschränken, mit:
einem Grundgestell (1),
mindestens einem an dem Grundgestell (1) vorgesehenen Presswangenpaar (6, 7), wobei zumindest eine Presswange in Bezug auf die andere Presswange entlang dem Grundgestell verfahrbar ist, und
mindestens einer Fördereinrichtung (5) zum Einfördern zu verpressender Korpusteile und/oder zum Ausfördern verpresster Korpusse,
**dadurch gekennzeichnet, dass**
die Korpuspresse (20) ferner eine Ultraschallschweißeinrichtung (15, 16, 17) zum Aufbringen von Ultraschallschwingungen auf Dübel, welche **dadurch** zumindest teilweise aufschmelzen, aufweist.

2. Korpuspresse nach Anspruch 1, **dadurch gekennzeichnet, dass** die Ultraschallschweißeinrichtung (15, 16, 17) mindestens eine Sonotrode (15) aufweist, die in mindestens einer der Presswangen (6, 7) angeordnet ist.

3. Korpuspresse nach Anspruch 2, **dadurch gekennzeichnet, dass** in jeder Presswange (6, 7) mindestens eines Presswangenpaares, insbesondere Horizontalpresswangenpaares, jeweils mindestens eine Sonotrode (15) angeordnet ist.

4. Korpuspresse nach Anspruch 2 oder 3, **dadurch gekennzeichnet, dass** die Sonotroden (15) derart in den Presswangen angeordnet sind, dass sie zumindest einen Teil einer Pressfläche der Presswangen (6, 7) bilden.

5. Korpuspresse nach einem der vorhergehenden Ansprüche, **dadurch gekennzeichnet, dass** die mindestens eine, mit mindestens einer Sonotrode (15) versehene Presswange (6, 7) ferner einen Booster (16) und auch einen Konverter (17) für die Sonotrode aufweist.

6. Korpuspresse nach einem der vorhergehenden Ansprüche, **dadurch gekennzeichnet, dass** sie ferner aufweist:
mindestens zwei an dem Grundgestell (1) angeordnete Supporte (2, 3), von denen zumindest einer an dem Grundgestell (1) verfahrbar ist,
mindestens zwei an den Supporten (2, 3) vertikal verfahrbar angeordnete Horizontalpresswangenpaare (6, 7), und
eine an den Supporten (2, 3) vertikal verfahrbar angeordnete, oberen Presswange (4).

7. Korpuspresse nach Anspruch 6, **dadurch gekennzeichnet, dass** die Supporte (2, 3) sich zumindest in vertikaler Richtung jeweils ausschließlich am Grundgestell (1) abstützen und am gegenüberliegenden Ende (2', 3') frei sind.

8. Korpuspresse nach Anspruch 6 oder 7, **dadurch gekennzeichnet, dass** die Supporte (2, 3) sich jeweils über mindestens zwei Führungselemente, insbesondere Führungsschienen (10), am Grundgestell (1) abstützen.

9. Korpuspresse nach einem der Ansprüche 6 bis 8, **dadurch gekennzeichnet, dass** sie ferner einen Antriebsständer (11) für die obere Presswange (4) aufweist, der einen Antrieb (11'), insbesondere Servoantrieb, besitzt.

10. Korpuspresse nach einem der Ansprüche 6 bis 9, **dadurch gekennzeichnet, dass** sie ferner einen Gewichtsausgleich (12) aufweist, der bevorzugt in den Antriebsständer (11) integriert ist und/oder pneumatisch arbeitet.

11. Korpuspresse nach einem der vorhergehenden Ansprüche, **dadurch gekennzeichnet, dass** sie ferner mindestens ein Halteelement für zu fügende Korpusteile aufweist, das bevorzugt in Bezug auf das Grundgestell verfahrbar ist.

12. Korpuspresse nach Anspruch 11, **dadurch gekennzeichnet, dass** das mindestens eine Halteelement mindestens eine Sonotrode und einen Booster sowie einen Konverter für die Sonotrode aufweist.

13. Verfahren zum Verpressen von Korpusteilen zu Möbelkorpussen, wie z.B. Hoch-, Ober- oder Unterschränken, unter Einsatz einer Korpuspresse (20) nach einem der vorhergehenden Ansprüche, mit den Schritten:
Bereitstellen von Korpusteilen, die zumindest teilweise aus Holz, Holzwerkstoffen, Kunststoff oder dergleichen bestehen,
Fügen der Korpusteile unter Einsatz von Dübeln, die zumindest teilweise aus einem thermoplastischen Werkstoff bestehen, zu einem Möbelkorpus,
Einfördern der gefügten Korpusteile in die Korpuspresse,
Verpressen der Korpusteile bei gleichzeitiger Aufbringung von Ultraschallschwingungen auf die Dübel unter Einsatz der mindestens einen Sonotrode (15), wobei die Dübel zumindest teilweise aufschmelzen.

## Claims

1. Carcass clamp (20) for pressing carcass parts to form furniture carcasses such as e.g. tall, wall or floor units, having:
a main frame (1),
at least one pair of pressing plates (6, 7) provided on the main frame (1), at least one pressing plate being movable along the main frame in relation to the other pressing plate, and
at least one conveying device (5) for feeding in carcass parts to be pressed and/or for discharging pressed carcasses,
**characterised in that**
the carcass clamp (20) further has an ultrasonic welding device (15, 16, 17) for applying ultrasonic vibrations to dowels which at least partially melt as a result.

2. Carcass clamp according to claim 1, **characterised in that** the ultrasonic welding device (15, 16, 17) has at least one sonotrode (15) which is arranged in at least one of the pressing plates (6, 7).

3. Carcass clamp according to claim 2, **characterised in that** in each pressing plate (6, 7) of at least one pair of pressing plates, in particular pair of horizontal pressing plates, is arranged at least one sonotrode (15).

4. Carcass clamp according to claim 2 or 3, **characterised in that** the sonotrodes (15) are arranged in the pressing plates in such a way that they form at least a part of a pressing surface of the pressing plates (6, 7).

5. Carcass clamp according to any of the preceding claims, **characterised in that** the at least one pressing plate (6, 7) which is provided with at least one sonotrode (15) further has a booster (16) and also a converter (17) for the sonotrode.

6. Carcass clamp according to any of the preceding claims, **characterised in that** it further has:
at least two supports (2, 3) which are arranged on the main frame (1) and at least one of which is movable on the main frame (1),
at least two pairs of horizontal pressing plates (6, 7) arranged so as to be movable vertically on the supports (2, 3), and
an upper pressing plate (4) arranged so as to be movable vertically on the supports (2, 3).

7. Carcass clamp according to claim 6, **characterised in that** the supports (2, 3) are supported in each case exclusively on the main frame (1) at least in the vertical direction and are free at the opposite end (2', 3').

8. Carcass clamp according to claim 6 or 7, **characterised in that** the supports (2, 3) are supported on the main frame (1) in each case via at least two guide elements, in particular guide rails (10).

9. Carcass clamp according to any of claims 6 to 8, **characterised in that** it further has a drive stand (11) for the upper pressing plate (4), which has a drive (11'), in particular servo drive.

10. Carcass clamp according to any of claims 6 to 9, **characterised in that** it further has a counterbalance (12) which is preferably integrated in the drive stand (11) and/or works pneumatically.

11. Carcass clamp according to any of the preceding claims, **characterised in that** it further has at least one holding element for carcass parts to be joined, which is preferably movable in relation to the main frame.

12. Carcass clamp according to claim 11, **characterised in that** the at least one holding element has at least one sonotrode and a booster as well as a converter for the sonotrode.

13. Method for pressing carcass parts to form furniture carcasses such as e.g. tall, wall or floor units, using a carcass clamp (20) according to any of the preceding claims, with the steps of:
providing carcass parts which are at least partially made of wood, wood materials, plastic or the like,
joining the carcass parts using dowels which are at least partially made of a thermoplastic material, to form a furniture carcass,
feeding the joined carcass parts into the carcass clamp,
pressing the carcass parts, at the same time applying ultrasonic vibrations to the dowels, using the at least one sonotrode (15), the dowels at least partially melting.

## Revendications

1. Presse à carcasses (20) pour compacter des parties de carcasses en des corps de meuble tels que des armoires hautes, murales ou basses, comprenant un bâti de base (1),
au moins une paire de joues de compression (6, 7), au moins une joue de compression pouvant être déplacée par rapport à l'autre joue de compression le long du bâti de base, et
au moins un dispositif de transport (5) pour descendre des parties de carcasses à compacter et/ou pour extraire des carcasses compactées,
**caractérisée en ce que**
la presse à carcasses (20) présente de plus un dispositif de soudage à ultrasons (15, 16, 17) pour appliquer des vibrations ultrasonores sur des chevilles qui fondent par là-même au moins en partie.

2. Presse à carcasses selon la revendication 1, **caractérisée en ce que** le dispositif de soudage à ultrasons (15, 16, 17) présente au moins une sonotrode (15) qui est disposée au moins dans l'une des joues de compression (6, 7).

3. Presse à carcasses selon la revendication 2, **caractérisée en ce que** dans chaque joue de compression (6, 7) d'au moins une paire de joues de compression, en particulier de la paire de joues de compression horizontales est disposée respectivement au moins une sonotrode (15).

4. Presse à carcasses selon la revendication 2 ou 3, **caractérisée en ce que** les sonotrodes (15) sont disposées de telle manière dans les joues de compression qu'elles forment au moins une partie d'une surface de compression des joues de compression (6, 7).

5. Presse à carcasses selon l'une quelconque des revendications précédentes, **caractérisée en ce qu'**au moins une joue de compression (6, 7) pourvue d'au moins une sonotrode (15) présente de plus un suramplificateur (16) ainsi qu'un convertisseur (17) pour la sonotrode.

6. Presse à carcasses selon l'une quelconque des revendications précédentes, **caractérisée en ce qu'**elle présente de plus :
au moins deux chariots (2, 3) disposés sur le bâti de base (1), dont au moins un peut être déplacé sur le bâti de base (1),
au moins deux paires de joues de compression horizontales (6, 7) disposées de manière mobile verticalement sur les chariots (2, 3), et
une joue de compression (4) supérieure, disposée de manière mobile verticalement sur les chariots (2, 3).

7. Presse à carcasses selon la revendication 6, **caractérisée en ce que** les chariots (2, 3) s'appuient au moins dans le sens vertical respectivement exclusivement sur le bâti de base (1) et sont libres sur l'extrémité opposée (2', 3').

8. Presse à carcasses selon la revendication 6 ou 7, **caractérisée en ce que** les chariots (2, 3) s'appuient respectivement par le biais d'au moins deux éléments de guidage, en particulier des rails de guidage (10), sur le bâti de base (1).

9. Presse à carcasses selon l'une quelconque des revendications 6 à 8, **caractérisée en ce qu'**elle présente de plus un support d'entraînement (11) pour la joue de compression (4) supérieure qui possède un entraînement (11'), en particulier une servocommande.

10. Presse à carcasses selon l'une quelconque des revendications 6 à 9, **caractérisée en ce qu'**elle présente de plus un équilibrage de poids (12) qui est intégré de préférence dans le support d'entraînement (11) et/ou travaille pneumatiquement.

11. Presse à carcasses selon l'une quelconque des revendications précédentes, **caractérisée en ce qu'**elle présente de plus au moins un élément de retenue pour des parties de carcasses à assembler, qui peut être déplacé de préférence par rapport au bâti de base.

12. Presse à carcasses selon la revendication 11, **caractérisée en ce qu'**au moins un élément de retenue présente au moins une sonotrode et un suramplificateur ainsi qu'un convertisseur pour la sonotrode.

13. Procédé de compactage de parties de carcasses en des corps de meuble tels que des armoires hautes, murales ou basses, en utilisant une presse à carcasses (20) selon l'une quelconque des revendications précédentes, comportant les étapes suivantes :
mise à disposition de parties de carcasses qui se composent au moins en partie de bois, de matériaux dérivés du bois, de matière plastique ou similaires,
assemblage des parties de carcasses en utilisant des chevilles qui se composent au moins en partie d'un matériau thermoplastique pour former un corps de meuble,
descente des parties de carcasses assemblées dans la presse à carcasses,
compactage des parties de carcasses lors de l'application simultanée de vibrations ultrasonores sur les chevilles en utilisant au moins une sonotrode (15), par quoi les chevilles fondent au moins en partie.
